# EUROPÄISCHE PATENTSCHRIFT

(11) **EP 2 726 326 B1**
(45) Veröffentlichungstag und Bekanntmachung des Hinweises auf die Patenterteilung: **01.06.2016**
(21) Anmeldenummer: 12728546.8
(22) Anmeldetag: 19.06.2012
(51) Int. Cl.: B60N 3/10

(54) **KRAFTFAHRZEUG**
MOTOR VEHICLE
VÉHICULE AUTOMOBILE

(30) Priorität: 28.06.2011 DE 102011078162
(43) Veröffentlichungstag der Anmeldung: 07.05.2014
(73) Patentinhaber: Bayerische Motoren Werke Aktiengesellschaft, 80809 München (DE)
(72) Erfinder: FRICK, Stefan, 85737 Ismaning (DE)
(86) Internationale Anmeldenummer: PCT/EP2012/061699
(87) Internationale Veröffentlichungsnummer: WO 2013/000763

(56) Entgegenhaltungen:
- EP-A1- 2 562 035
- US-A1- 2005 189 776
- US-A1- 2007 199 864
- US-A1- 2009 175 049

## Beschreibung

Die Erfindung betrifft ein Kraftfahrzeug gemäß dem Oberbegriff des Anspruchs 1. Aus der DE 102008060964 A1 ist bereits ein Kraftfahrzeug bekannt, bei dem ein Ablagefach nur als Ablagefach oder als ein Aschenbecher mit Zigarettenanzünder und als Cupholder, d.h. zur Halterung von Getränkebehältnissen wie Bechern oder dergleichen, dient. Das Ablagefach kann durch mindestens einen Deckel überdeckt werden.
Aus der nachveröffentlichten EP 2 562 035 A1 ist ein Getränkehalter mit einem um eine Schwenkachse verschwenkbaren, äußeren Deckel und mit einem um eine weitere Schwenkachse verschwenkbaren Funktionsdeckel bekannt.

Aus der US 2005/189776 A1 ist ein gattungsgemässes Kraftfahrzeug mit einem Ausstattungsbauteil in einem Fahrzeuginnenraum des Kraftfahrzeuges bekannt, das einen Stauraum aufweist,
der durch einen äußeren, oberen Deckel verschließbar ist. Der obere Deckel ist aus einer geschlossenen Position in eine geöffnete Position und zurück verschiebbar, wobei in der geöffneten Position des oberen Deckels der Stauraum zugänglich ist. Unterhalb des oberen Deckels sind in senkrechter Richtung voneinander beabstandete weitere Funktionsdeckel vorgesehen. Der jeweilige Funktionsdeckel ist aus einer geschlossenen Position in eine geöffnete Position und zurück verschiebbar.
Der jeweilige Funktionsdeckel weist eine Aussparung auf, wobei die Aussparungen der unterschiedlichen Funktionsdeckel in der Größe unterschiedlich sind. In Abhängigkeit von der Größe eines Getränkebehälters wird ein Funktionsdeckel mit einer entsprechend großen Aussparung ausgewählt. In der geschlossenen Position des jeweiligen ausgewählten Funktionsdeckels kann somit in der Aussparung ein Getränkebehälter gehaltert werden. Zusätzlich sind in einem Boden des Stauraums mindestens zwei unterschiedliche Vertiefungen ausgebildet, in denen zusätzlich der Boden des entsprechenden Getränkebehälters formschlüssig gehaltert ist.
Aus der US 2007/199864 A1 ist ein Stauraum bekannt, der durch einen verschwenkbaren Deckel verschließbar ist. Bei der US 2007/199864 A1 ist ein Einsatz zur Halterung von Getränkebehältnissen vorgesehen, der lagefest in entsprechenden Vertiefungen des Stauraumes der Vorrichtung angeordnet ist.
Bei der US 2009/175049 A1 ist ein Stauraum bekannt, der durch einen verschiebbaren Deckel verschließbar ist. Ferner ist ein verschiebbarer Funktionsdeckel vorgesehen, bei dem einstückig mindestens ein becherförmiges Halterungsbauteil ausgebildet ist.
Aufgabe der Erfindung ist es, ein Kraftfahrzeug mit einer Vorrichtung zur Halterung von Getränkebehältnissen und zur Ablage von Gegenständen zu schaffen, die einen einfachen Aufbau aufweist.
Diese Aufgabe wird durch die Merkmale des Anspruchs 1 gelöst.
In einem Fahrzeuginnenraum eines Kraftfahrzeugs sind Vorrichtungen zur Halterung von Getränkebehältnissen und zur Ablage von Gegenständen vorgesehen, die an oder in Ausstattungsbauteilen angeordnet sind. Die jeweilige Vorrichtung weist einen Stauraum auf, der durch mindestens einen Deckel verschließbar ist.

Erfindungsgemäss ist oberhalb des Staufaches der Vorrichtung ein Funktionsdeckel vorgesehen, der mindestens eine Durchgangsöffnung aufweist. Der Funktionsdeckel ist aus einer Gebrauchsposition, in der der Funktionsdeckel zur Halterung eines Behältnisses dient, in eine Nicht-Gebrauchsposition bewegbar, in der das darunterliegende Staufach frei zugänglich ist. Oberhalb des Funktionsdeckels ist ein äußerer, oberer Deckel vorgesehen, der aus einer geschlossenen Position in eine geöffnete Position und zurück bewegbar ist.

Bei der erfindungsgemäßen Vorrichtung kann das zur Verfügung stehende Bauraumvolumen maximal als Ablage und/oder als Getränkehalter genutzt werden. Durch die erfindungsgemäße Vorrichtung ist es auch möglich, in einem begrenzen Bauraumumfeld eine bestmögliche Individualisierung zwischen Ablagemöglichkeit und Getränkehalter darzustellen. Bei der erfindungsgemäßen Vorrichtung ist somit ein Ablagefach vorgesehen, das zur Ablage von beliebigen Gegenständen und gleichzeitig als Cupholder, d.h. zur Halterung von Getränkebehältnissen, dient.

Erfindungsgemäss sind der äußere Deckel und der darunter befindliche Funktionsdeckel über Schwenkelemente an einem Gehäuse der Vorrichtung angeordnet.

In einer nicht beanspruchten Ausführungsform sind der äußere Deckel und der Funktionsdeckel verschiebbar an einem Rahmen oder einem oberen Gehäuseabschnitt des Fahrzeugbauteils angeordnet.

In einer weiteren, nicht beanspruchten Ausführungsform sind der äußere Deckel verschwenkbar und der Funktionsdeckel verschiebbar angeordnet.

In einer weiteren, nicht beanspruchten Ausführungsform ist der äußere Deckel verschiebbar
und der Funktionsdeckel ist verschwenkbar.

Erfindungsgemäss ist an gegenüber liegenden Seitenwänden des Gehäuses eine sich in Querrichtung y des Staufaches erstreckende Dreh- oder Schwenkachse ausgebildet, an denen Schwenkarme des äußeren Deckels drehbar angeordnet sind.
Das Gehäuse ist vorteilhafterweise an einem Rahmen angeordnet. Zwischen einer Wand des Gehäuses und dem Rahmen ist in einer vorteilhaften Ausführungsform ein Spalt ausgebildet, der in einen Hohlraum außerhalb des Gehäuses führt. Der äußere Deckel ist in der geöffneten Position und der Funktionsdeckel in der Nicht-Gebrauchsposition in dem Hohlraum verstaubar.

In einer nicht beanspruchten Ausführungsform sind in dem Rahmen des
Fahrzeugbauteils an gegenüberliegenden Seiten des Rahmens jeweils eine in x-Richtung verlaufende Längsführung für den äußeren Deckel und eine in x-Richtung verlaufende Längsführung für den Funktionsdeckel ausgebildet.
Vorteilhafterweise ist die jeweilige Führung für den äußeren Deckel und die jeweilige Führung den Funktionsdeckel unterhalb eines oberen Abschnitts des Fahrzeugbauteils ausgebildet. In einer Ausführungsform ist das Fahrzeugbauteil eine Mittelkonsole. In einer weiteren, nicht beanspruchten Ausführungsform sind die Führungen für den äußeren Deckel und die Führungen für den Funktionsdeckel in Höhe des oberen Abschnitts des Fahrzeugbauteils ausgebildet.
Der Funktionsdeckel weist vorteilhafterweise mindestens eine Durchgangsöffnung auf. In der jeweiligen Durchgangsöffnung ist mindestens ein Halterungselement vorgesehen.
In einer vorteilhaften Ausführungsform sind in der jeweiligen Durchgangsöffnung zwei Halterungselemente oder drei Halterungselemente oder vier Halterungselemente vorgesehen.
Vorteilhafterweise ist das jeweilige Halterungselement über mindestens ein Federelement vorgespannt, so dass nach einer Verschwenkung des Halterungselements nach unten in Richtung eines Bodens des Staufachs eine durch das jeweilige Federelement bewirkte Vorspannkraft das Halterungselement nach oben verschwenkt.

Bei einer nicht beanspruchten Ausführung mit einem verschiebbaren äußeren Deckel und/oder bei einem verschiebbaren Funktionsdeckel ist vorteilhafterweise jeweils ein Bedienelement vorgesehen, das über den äußeren Deckel oder über den Funktionsdeckel ragt.
In einer vorteilhaften Ausführungsform ist an einer Ecke des Funktionsdeckels eine Schwenkachse ausgebildet, die ein Verschwenken des Funktionsdeckels in einer in etwa waagrechten Ebene oder einer Ebene parallel zu einer Unterseite des äußeren Deckels ermöglicht.

In einer nicht beanspruchten Ausführung ist eine in Querrichtung y des Staufachs verlaufende Schwenkachse an einer Seitenwand ausgebildet, die ein Verschwenken des Funktionsdeckels aus der Gebrauchsposition, die in einer im wesentlichen waagrechten Ebene liegt, in die Nicht-Gebrauchsposition, die in einer im wesentlichen senkrechten Ebene liegt, und zurück in die Gebrauchsposition ermöglicht, wobei der äußere Deckel verschiebbar in Führungen angeordnet ist.

In einer weiteren, nicht beanspruchten Ausführungsform wird der äußere Deckel beim Verschieben aus der geschlossenen Position in die geöffnete Position in die eine Richtung und der Funktionsdeckel beim Verschwenken aus der Gebrauchsposition in die Nicht-Gebrauchsposition in die dazu entgegengesetzte Richtung bewegt.
Zwischen der Seitenwand des Staufachs und einem zu dieser Seitenwand sich anschließenden oberen Abschnitt des Fahrzeugbauteils ist vorteilhafterweise ein Spalt oder eine Durchgangsöffnung ausgebildet. An den Spalt schließt sich ein Hohlraum an. Der Funktionsdeckel ist in der Nicht-Gebrauchsposition in den Hohlraum verschwenkt.
Ausführungsformen der Erfindung werden nachstehend anhand der Zeichnungen beispielshalber beschrieben. Dabei zeigen:

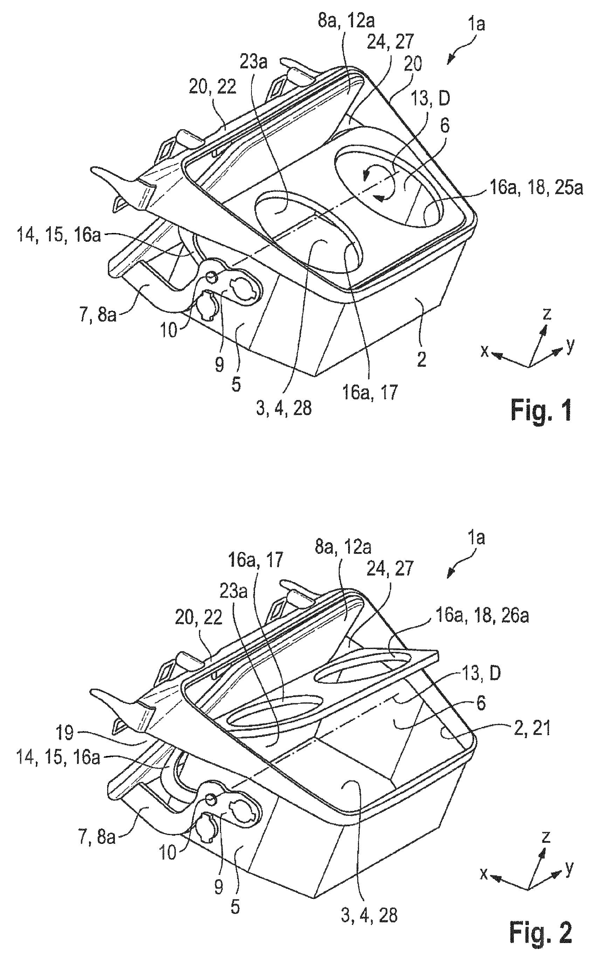

- Fig. 1: eine perspektivische Ansicht einer ersten Ausführungsform eines Ablagefachs, bei dem ein Dekordeckel aus einer Schließposition, die ein Ablagefach vollständig überdeckt, in eine geöffnete Position bewegt ist und ein darunter liegender Funktionsdeckel in einer Gebrauchsstellung angeordnet ist, in der mindestens eine in dem Funktionsdeckel ausgebildete Öffnung zur Halterung eines Getränkebehältnisses dient,
- Fig. 2: eine perspektivische Ansicht entsprechend der Fig. 1, wobei der Funktionsdeckel aus der in der Fig. 1 gezeigten Gebrauchslage in eine Nicht-Gebrauchslage um eine mit dem Dekordeckel gemeinsame Drehachse um einen Winkel geschwenkt ist, so dass nach einem vollständigen Verschwenken des Funktionsdeckels in die NichtGebrauchslage der unterhalb des Funktionsdeckels befindliche Stauraum nutzbar ist,

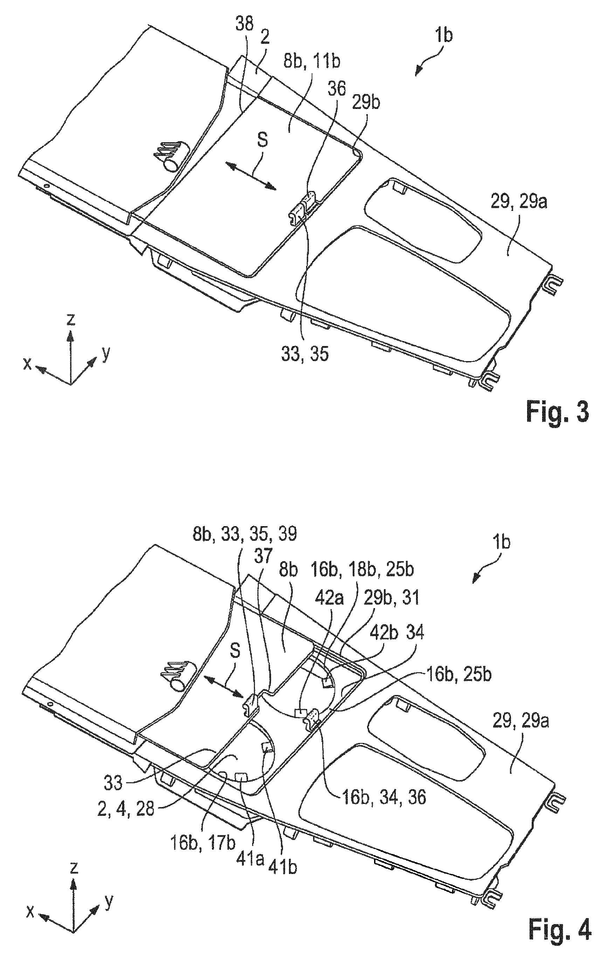

- Fig. 3: eine perspektivische Ansicht von oben auf eine nicht beanspruchte Ausführungsform eines Ablagefachs, bei dem im Unterschied zu der ersten Ausführungsform der Fig. 1 und 2 der außen liegende Dekordeckel und der darunter befindliche Funktionsdeckel in Führungen verschiebbar aus einer geschlossenen Position in eine geöffnete Position bzw. aus einer Cupholder-Funktionsstellung in eine Nicht-Gebrauchsposition verschiebbar sind, wobei sich der Dekordeckel in der Fig. 3 in der geschlossenen Position befindet,
- Fig. 4: eine perspektivische Ansicht der Ausführungsform entsprechend der Fig. 3, wobei in der Fig. 4 der Dekordeckel teilweise in die Nicht-Gebrauchsstellung verschoben ist, so dass der darunter befindliche Funktionsdeckel für die Cupholder-Funktion erkennbar ist,

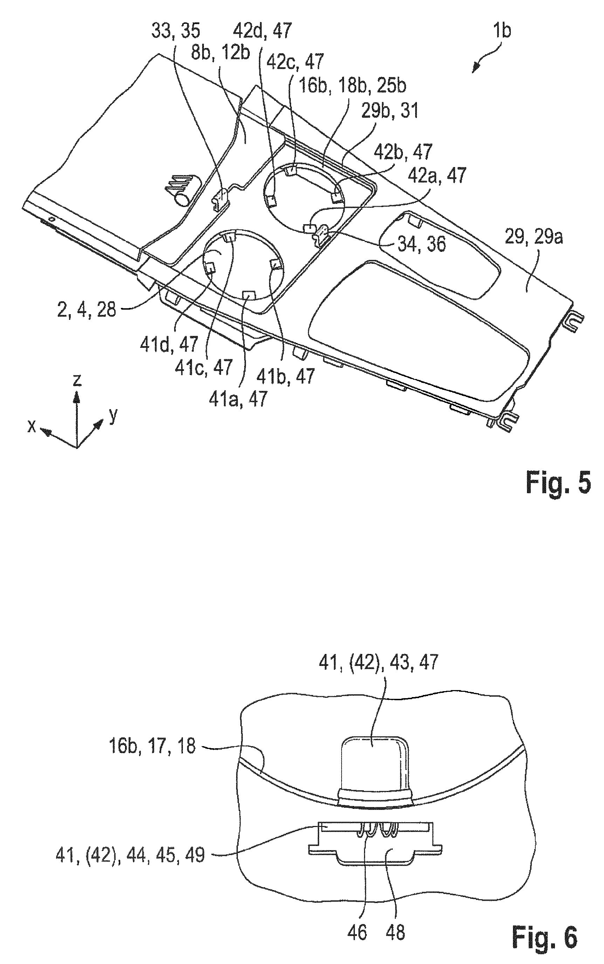

- Fig. 5: eine perspektivische Ansicht der Ausführungsform entsprechend der Fig. 4, wobei sich der Dekordeckel vollständig in der Nicht-Gebrauchsposition befindet, so dass die in der Fig. 5 gezeigten Durchgangsöffnungen des Funktionsdeckels zugänglich für die Aufnahme von Bechern oder dergleichen ist,
- Fig. 6: eine Detailansicht eines an dem Funktionsdeckel ausgebildeten Halterungselementes, das über mindestens ein Federelement verschwenkbar an dem Funktionsdeckel angeordnet ist,

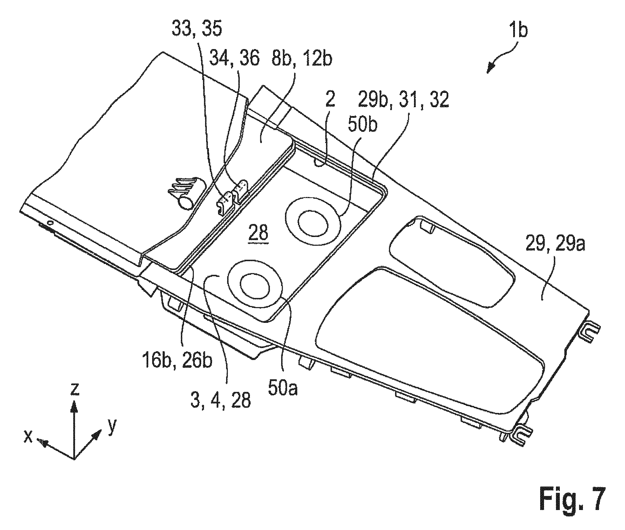

- Fig. 7: eine perspektivische Ansicht der Ausführungsform gemass den Figuren 3, 4 und 5, wobei sich sowohl der Dekordeckel als auch der Funktionsdeckel in der Nicht-Gebrauchsstellung befinden, so dass der gesamte Stauraum des Ablagefachs zur Ablage von Gegenständen zugänglich ist,

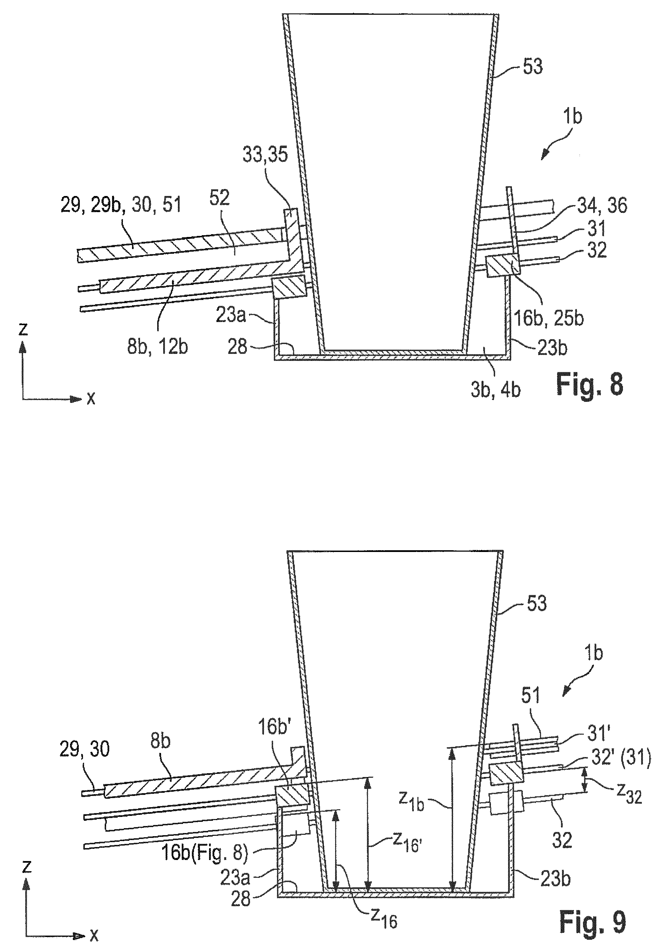

- Fig. 8: eine Schnittansicht durch das Ablagefach, bei der sich der außenangeordnete, verschiebbare Dekordeckel in der geöffneten Position befindet, wobei der Dekordeckel in Führungen angeordnet ist, die unterhalb einer Abdeckfläche der Mittelkonsole ausgebildet sind, und wobei der darunter liegende, verschiebbare Funktionsdeckel in seiner Gebrauchsposition angeordnet ist, in der der Funktionsdeckel einen Becher haltert,
- Fig. 9: eine Schnittansicht durch das Ablagefach, bei der sich der außenangeordnete, verschiebbare Dekordeckel in der geöffneten Position befindet, wobei der Dekordeckel in Führungen angeordnet ist, die an Innenrändern einer in der Abdeckfläche vorgesehenen Aussparung der Mittelkonsole ausgebildet sind, und wobei der darunter liegende, verschiebbare Funktionsdeckel höher als der in der Fig. 8 gezeigte Funktionsdeckels in seiner Gebrauchsposition angeordnet ist, in der der Funktionsdeckel einen Becher haltert,

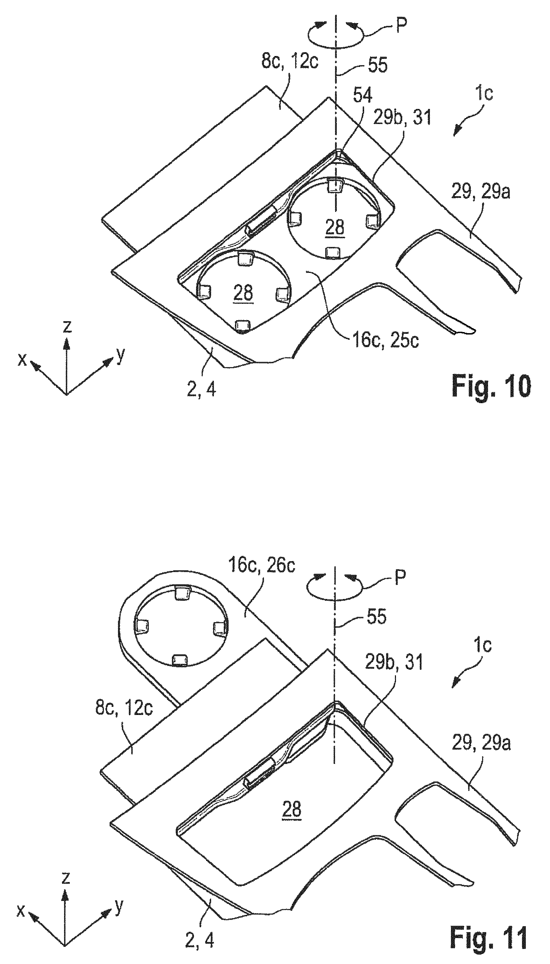

- Fig. 10 und 11: eine weitere, nicht beanspruchte Ausführungsform, bei der der außenangeordnete Dekordeckel in Führungen verschiebbar ist und der Funktionsdeckel über eine in einer Ecke des Ablagefaches angeordnete Schwenkachse aus der in der Fig. 10 gezeigten Gebrauchsposition in eine in der Fig. 11 gezeigte Nicht-Gebrauchsposition verschwenkbar, so dass das Staufach vollständig zugänglich ist und als Ablagefach dienen kann, und

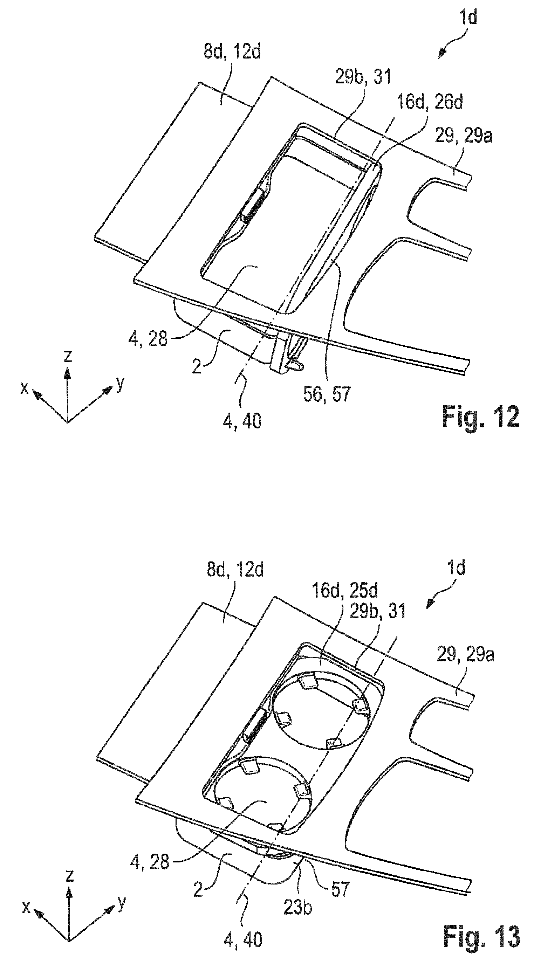

- Fig. 12 und 13: eine nicht beanspruchte Ausführungsform, die sich von der in den Fig. 10 und 11 gezeigten dritten Ausführungsform dadurch unterscheidet, dass der Funktionsdeckel um eine in Querrichtung verlaufende waagrechte Achse aus der in der Fig. 12 gezeigten Nicht-Gebrauchsposition in die in der Fig. 13 gezeigte Gebrauchsposition verschwenkbar ist.

Die Fig. 1 zeigt eine Vorrichtung 1a zur Halterung von Getränkebehältnissen und zur Ablage von Gegenständen. Die Vorrichtung 1 a ist beispielsweise in einer Mittelkonsole 29 eines Kraftfahrzeuges zwischen zwei Vordersitzen angeordnet. Beispielsweise kann die Vorrichtung 1 a an einem vorderen Ende der Mittelkonsole 29 an einem unteren Ende einer Instrumententafel angeordnet sein.

Die Vorrichtung 1 a weist ein nach oben hin offenes Gehäuse 2 auf, dessen Innenraum 3 als ein Staufach 4 zur Ablage von Gegenständen und zur Aufnahme von Getränkebehältnissen dient. An gegenüber liegenden Seitenwänden 5, 6 des Gehäuses 2 ist jeweils ein Schwenkarm 7 eines äußeren Deckels oder Dekordeckels 8a schwenkbar an seinem freien Ende 9 an einem vorstehenden Zapfen 10 gelagert. Über den jeweiligen Schwenkarm 7 des äußeren Deckels 8a ist der äußere Deckel 8a aus einer nicht dargestellten, geschlossenen Position 11 (a) in eine geöffnete Position 12a und zurück verschwenkbar. Eine Oberfläche 19 des äußeren Deckels 8a kann aus optischen Gründen mit einer Dekorschicht und/oder mit Designelementen, wie Symbolen oder Buchstaben oder Lichteffekten versehen sein.

Die beiden an den gegenüber liegenden Seitenwänden 5, 6 ausgebildeten Zapfen 10 bilden eine gemeinsame Schwenk- oder Drehachse 13, wie dies durch die strichpunktierte Linie und den Pfeil D dargestellt ist. An dem jeweils gleichen Zapfen 10 ist ferner ein freies Ende 14 eines Schwenkarmes 15 eines Funktionsdeckels 16a drehbar gelagert. In der gezeigten Ausführungsform weist der Funktionsdeckel 16a zwei Durchgangsöffnungen 17, 18 zur Halterung eines Getränkebehältnisses auf. Der Funktionsdeckel 16a befindet sich in der Fig. 1 in einer Gebrauchsposition 25a.

In der in den Fig. 1 und 2 gezeigten Ausführungsform der Vorrichtung 1 a ist ferner ein Rahmen 20 dargestellt, an dem ein oberer Rand 21 des Gehäuses 2 befestigt ist. Ferner ist zwischen einem vorderen Abschnitt 22 des Rahmens 20 und einer vorderen Seitenwand 23a des Gehäuses 2 ein Spalt 24 ausgebildet. Durch den Spalt 24 ist der äußere Deckel 8a in die geöffnete Position 12a und der Funktionsdeckel 16a in eine Nicht-Gebrauchsposition 26a hindurch schwenkbar und in einen, hinter dem Gehäuse 2 befindlichen Hohlraum 27 versenkbar.

Ein Boden 28 des Gehäuses 2 dient als Auflagefläche der in dem Staufach 4 abgelegten Gegenstände und als Auflagefläche eines Bodens eines Getränkebehältnisses, das in der jeweiligen Durchgangsöffnung 17, 18 des Funktionsdeckels 16a gehaltert ist.

Die Fig. 3 zeigt eine perspektivische Ansicht von oben auf eine nicht beanspruchte Ausführungsform der Vorrichtung 1b zur Halterung von Getränkebehältnissen und zur Ablage von Gegenständen. Gleiche Bauteile der ersten Ausführungsform und der zweiten Ausführungsform sind mit gleichen Bezugszeichen versehen.
Im Unterschied zu der in den Fig. 1 und 2 gezeigten ersten Ausführungsform der Vorrichtung 1 a, bei der die Verstellung des äußeren Deckels oder des Dekordeckels 8a und des darunter befindlichen Funktionsdeckels 16a über eine Drehbewegung entsprechend dem Pfeil D erfolgt, findet bei der in den Fig. 3 bis 9 gezeigten zweiten Ausführungsform der Vorrichtung 1 b die Verstellung des äußeren Deckels 8b und des Funktionsdeckels 16b durch eine Schiebebewegung entsprechend dem Pfeil S statt.
In der Fig. 3 befindet sich der äußere Deckel 8b in der geschlossenen Position 11b. In einer in den Fig. 3, 4, 5 und 7 teilweise dargestellten Mittelkonsole 29 ist in einer nach oben zeigenden Abdeckfläche 29a eine Aussparung 29b vorgesehen. In der Aussparung 29b sind in Längsrichtung x parallel zueinander verlaufende, übereinander angeordnete, beabstandete Führungen 31, 32 ausgebildet, die in den Figuren 8 und 9 dargestellt sind.
In den Führungen 31, 32 sind der äußere Deckel 8b zwischen der geschlossenen Position 11 b und der geöffneten Position 12b und der darunter befindliche Funktionsdeckel 16b zwischen der Gebrauchsposition 25b und der Nicht-Gebrauchsposition 26b verschiebbar.
An einem hinteren Rand 33 des äußeren Deckels 8b und an einem hinteren Rand 34 des Funktionsdeckels 16b ist jeweils ein nach oben abstehendes Bedienelement 35, 36 angeordnet. Aus der Darstellung der Fig. 3 ist erkennbar, dass das Gehäuse 2b der Vorrichtung 1 b über einen Bereich hinter einem vorderen Rand 38 des äußeren Deckels 8b übersteht, so dass sich der hintere Rand 33 des äußeren Deckels 8b in der geöffneten Position 12b und der hintere Rand 34 des Funktionsdeckels 16b in der Nicht- Gebrauchsposition 26b oberhalb des Gehäuses 2b der Vorrichtung 1 b und damit oberhalb des Staufaches 4b befindet.

Wie aus der Fig. 4 hervorgeht, ist am vorderen Rand 33 des oberen, äußeren Deckels 8b eine Aussparung 37 ausgebildet. Die Form und Größe der Aussparung 37 ist so bemessen, dass das Bedienelement 36 des Funktionsdeckels 16b in der geschlossenen Position 11 b des äußeren Deckels 8b aufgenommen ist.

In der Fig. 4 befindet sich der äußere Deckel 8b in einer teilweise geöffneten Position 39. Der darunter befindliche Funktionsdeckel 16b befindet sich in seiner das darunter befindliche Staufach 4b überdeckenden Gebrauchsposition 25b zur Halterung von Cupholdern oder dgl.. In den Durchgangsöffnungen 17b, 18b des Funktionsdeckels 16b können in der Gebrauchsposition 25b nicht dargestellte Getränkebehältnisse wie zylindrische oder konisch zulaufende Becher gehaltert werden.

In der in den Fig. 4 und 5 gezeigten Ausführungsform des Funktionsdeckels 16b sind vier um 90° beabstandete, verschwenkbare Halterungselemente 41a bis 41d und 42a bis 42d angeordnet. Unterhalb des Funktionsdeckels 16b ist der Boden 28 des Staufachs 4 des Gehäuses 2 erkennbar. In der Fig. 5 befindet sich der äußere Deckel 8b in der geöffneten Position 12b.

In der Fig. 6 ist eine vergrößerte Darstellung eines Halterungselementes 41, (42) dargestellt. Das Halterungselement 41 weist einen in die jeweilige Durchgangsöffnung 17, 18 hineinragenden vorderen Abschnitt 43 auf. Die Oberfläche des vorderen Abschnitts 43 ist zur Erhöhung der Reibung mit einer Oberfläche versehen, die aus Gummi, einem gummiähnlichen Material oder einem entsprechenden Kunststoff oder dgl. überzogen ist.

An einem hinteren Abschnitt 44 des Halterungselementes 41, (42) ist eine zweigeteilte, zylindrische Lagerungsachse 45 ausgebildet. Zwischen der Lagerungsachse 45 des Halterungselementes 41 und einer nicht gezeigten Unterseite des Funktionsdeckels 16b ist mindestens ein Federelement 46 unter Vorspannung eingespannt. Beim Einstellen eines Getränkebehältnisses in die jeweilige Durchgangsöffnung 17, 18 des Funktionsdeckels 16b wird das Halterungselement 41, 42 unter Erhöhung der Vorspannung des Federelementes 46 nach unten in Richtung des Staufachs 4 abgesenkt.

Durch das jeweils vorhandene Federelement 46 erfolgt ein Anpressdruck auf eine Oberfläche des Getränkebehältnisses. Wenn nun das Getränkebehältnis aus der jeweiligen Durchgangsöffnung 17, 18 herausgenommen ist, schwenkt das Halterungselement 41, 42 in die ursprüngliche, in etwa waagrecht verlaufende Position 47 zurück, die in den Fig. 4, 5 und 6 gezeigt ist.
In der in der Fig. 6 gezeigten Ausführungsform ist in dem Funktionsdeckel 16b eine Aussparung 48 vorgesehen. Die Aussparung 48 entspricht der Form und Größe des hinteren Abschnittes 44 des Halterungselementes 41, 42. Durch die Aussparung 48 ist der hintere Abschnitt 44 des Halterungselementes 41 im Funktionsdeckel 16b montierbar und in die in der Fig. 6 gezeigte Halterungsposition 49 bringbar.
In der Fig. 7 befindet sich der Funktionsdeckel 16b in der Nicht-Gebrauchsposition 26b, unterhalb des sich in der geöffneten Position 12b befindlichen äußeren Deckels 8b. Da der Deckel 8b und Funktionsdeckel 16b vollständig in einen von außen nicht sichtbaren Innenraum oder Hohlraum verschoben ist, ist der Stauraum 4 des Gehäuses 2 der Vorrichtung 1 b von oben frei zugänglich. Am Boden 28 des Gehäuses 2 sind zwei ringförmige Vertiefungen 50a und 50b zur formschlüssigen Halterung eines Getränkebehältnisses ausgebildet.
Die Fig. 8 zeigt eine Schnittansicht durch die Vorrichtung 1 b, bei der sich der äußere Deckel 8b in der geöffneten Position 12b befindet. Der darunter liegende Funktionsdeckel 16b befindet sich in seiner Gebrauchsposition 25, in der der Funktionsdeckel 16b einen Becher 53 haltert.

In der in der Fig. 8 gezeigten, nicht beanspruchten Ausführungsform ist der Rahmen 30 ein Bestandteil
der Mittelkonsole 29. In der nicht gezeigten, geschlossenen Position 11 b des äußeren Deckels 8b bildet der äußere Deckel 8b mit dem Rahmen 30 eine in etwa ebene Oberfläche.
Die beidseitig in Längsrichtung x im Rahmen 30 ausgebildeten Führungen 31 für den äußeren Deckel 8b und die beidseitig in Längsrichtung x im Rahmen 30 ausgebildeten Führungen 32 für den Funktionsdeckel 16b sind in der Fig. 8 unterhalb eines oberen Abschnittes 51 des Rahmens 30 angeordnet. Der obere Abschnitt 51, der ein Bestandteil der Abdeckfläche 29a der Aussparung 29b ist, überdeckt einen Hohlraum 52 in dem die Vorrichtung 1b angeordnet ist.
Im Unterschied dazu zeigt die Fig. 9 eine Schnittansicht der Vorrichtung 1 b, bei der der äußere Deckel 8b in gegenüber liegenden, in Längsrichtung x verlaufenden Führungen 31' geführt ist. Die Führungen 31'sind direkt im oberen Abschnitt 51 des Rahmens 30 ausgebildet. Der äußere Deckel 8b befindet sich somit auf gleicher Höhe wie der obere Abschnitt 51 des Rahmens 30 bzw. der Abdeckfläche 29a der Aussparung 29b.
Entsprechend können die Führungen 32' für den Funktionsdeckel 16b gegenüber den zum Vergleich in die Fig.9 zusätzlich eingezeichneten Führungen 32 der Fig. 8 nach oben um eine Höhe z₃₂ verlagert werden.
Durch die flächenbündige Führung des oberen Deckels 8b der Fig. 9 mit der Oberseite der Abdeckfläche 29a der Mittelkonsole 29 ergibt sich, bei gleicher Bautiefe z_{1b} der Vorrichtung 1b wie in der Fig. 8, eine Halterung des in dem Funktionsdeckei 16b gehalterten Behältnisses 53 mit einem größeren Abstand z_{16'} zum Boden 28 des Staufachs 4.
Im Vergleich und zur Verdeutlichung ist in der Fig. 9 die in der Fig. 8 gezeigte Anordnung des Funktionsdeckels 16b und dessen Führung 32 dargestellt. Der eingezeichnete Funktionsdeckel 16b der Fig. 8 haltert das Behältnis 53 mit einem Abstand z₁₆ zum Boden 28 des Staufachs 4. Die gewonnene Höhe z₃₂ ergibt sich aus der Differenz des Abstands z_{16'} zu dem Abstand z₁₆, d.h. z₃₂= z_{16'}- z₁₆.

Die Fig. 10 und 11 zeigen eine nicht beanspruchte Ausführungsform einer Vorrichtung 1c. Bei der
Vorrichtung 1c ist der äußere Deckel 8c in Führungen 31,31' entsprechend der Fig. 3 bis 9 in die geöffnete Position 12c verschoben. Die Führungen 31,31' sind beidseitig im Rahmen 30 ausgebildet.
Der Funktionsdeckel 16c ist jedoch in einer Ecke 54 des Gehäuses 2 des Staufaches 4 über eine Schwenkachse 55 entsprechend einem Pfeil P aus der in der Fig. 10 gezeigten Gebrauchsposition 25c in eine in der Fig. 11 gezeigte Nicht-Gebrauchsposition 26c und zurück verschwenkbar. In der Nicht-Gebrauchsposition 26c, die in der Fig. 11 gezeigt ist, ist das Staufach 4 vollständig zugänglich, so dass das Staufach 4 als Ablagefach dienen kann.

In den Fig. 12 und 13 ist eine nicht beanspruchte Ausführungsform einer Vorrichtung 1d
dargestellt. Bei der Vorrichtung 1 d ist der äußere Deckel 8d in Führungen 31 (31') entsprechend der Fig. 3 bis 9 in die geöffnete Position 12c verschoben.
Die Vorrichtung 1d unterscheidet sich von der in den Fig. 10 und 11 gezeigten dritten Ausführungsform, der Vorrichtung 1 c dadurch, dass der Funktionsdeckel 16d um eine in y- Richtung oder Querrichtung y des Staufachs 4 verlaufende waagrechte Achse 40 aus der in der Fig. 12 gezeigten Nicht-Gebrauchsposition 26d in die in der Fig. 13 gezeigte Gebrauchsposition 25d verschwenkbar ist.
Über die Schwenkachse 40 ist ein Verschwenken des Funktionsdeckels 16d aus der Gebrauchsposition 25d, die in einer im wesentlichen waagrechten Ebene liegt, in die Nicht-Gebrauchsposition 26d, die in einer im wesentlichen senkrechten Ebene liegt, und zurück möglich.
Zwischen einer hinteren Seitenwand 23b des Staufachs 4 und dem zur hinteren Seitenwand 23b sich anschließenden oberen Abschnitt 51 der Aussparung 29b des Bauteils 29 ist ein Spalt oder eine Durchgangsöffnung 56 ausgebildet. An den Spalt 56 schließt sich nach unten in z-Richtung ein Hohlraum 57 an. In der Nicht-Gebrauchsposition 26d ist der Funktionsdeckel 16d in den Hohlraum 57 verschwenkt.

## Patentansprüche

1. Kraftfahrzeug mit einem Fahrzeuginnenraum, in dem an oder in Ausstattungsbauteilen Vorrichtungen (1 a) zur Halterung von Getränkebehältnissen und zur Ablage von Gegenständen vorgesehen sind, wobei die jeweilige Vorrichtung (1 a) einen Stauraum (4) aufweist, der durch mindestens einen äusseren, oberen Deckel (8a) verschließbar ist, wobei
oberhalb eines Staufaches (4) der Vorrichtung (1 a) ein Funktionsdeckel (16a) vorgesehen ist, der mindestens eine Durchgangsöffnung (17, 18) aufweist, wobei der Funktionsdeckel (16a) aus einer Gebrauchsposition (25a), in der der Funktionsdeckel (16a) zur Halterung eines Behältnisses (53) dient, in eine Nicht-Gebrauchsposition (26a) bewegbar ist, in der das Staufach (4) frei zugänglich ist, und wobei oberhalb des Funktionsdeckels (16a) der äussere, obere Deckel (8a) vorgesehen ist,
der aus einer geschlossenen Position (11 a) in eine geöffnete Position (12a) und zurück bewegbar ist,
**dadurch gekennzeichnet, dass** der äußere, obere Deckel (8a) und der darunter
befindliche Funktionsdeckel (16a) über Schwenkelemente (7, 15) an einem Gehäuse (2) der Vorrichtung (1 a) angeordnet sind, und
dass an gegenüber liegenden Seitenwänden (5, 6) des Gehäuses (2) eine sich in Querrichtung y des Staufaches (4) erstreckende Dreh- oder Schwenkachse (13) ausgebildet ist, an denen Schwenkarme (7) des äußeren Deckels (8a) und Schwenkarme (15) des Funktionsdeckels (16a) drehbar angeordnet sind.

2. Kraftfahrzeug nach Anspruch 1,
**dadurch gekennzeichnet, dass** das Gehäuse (2) des Staufaches (4) an einem Rahmen (20) angeordnet ist, der an einem Fahrzeugbauteil (29, Fig.3) befestigt ist, und dass zwischen einer Wand (23) des Gehäuses (2) und dem Rahmen (20) ein Spalt (24, Fig.1, 2) ausgebildet ist, der in einen Hohlraum (27) außerhalb des Gehäuses (2) führt, und dass der äußere Deckel (8a) in der geöffneten Position (12a) und der Funktionsdeckel (16a) in der Nicht-Gebrauchsposition (26a) indem Hohlraum (27) verstaubar ist.

3. Kraftfahrzeug nach den Ansprüchen 1 oder 2,
**dadurch gekennzeichnet, dass** der Funktionsdeckel (16a) mindestens eine Durchgangsöffnung (17, 18) aufweist und dass in der jeweiligen Durchgangsöffnung (17, 18) mindestens ein Halterungselement (41, 42, Fig.4, 5) vorgesehen ist.

4. Kraftfahrzeug nach Anspruch 3,
**dadurch gekennzeichnet, dass** zwei Halterungselemente (41, 42) oder drei Halterungselemente (41, 42) oder vier Halterungselemente (41, 42, Fig.4) in der jeweiligen Durchgangsöffnung (17, 18) vorgesehen sind.

5. Kraftfahrzeug nach Anspruch 4,
**dadurch gekennzeichnet, dass** das jeweilige Halterungselement (41, 42) über mindestens ein Federelement (46, Fig.6) vorgespannt ist, so dass nach einer Verschwenkung des Halterungselements (41, 42) nach unten in Richtung eines Bodens (28) des Staufachs (4) eine durch das jeweilige Federelement (46) bewirkte Vorspannkraft das Halterungselement (41, 42) nach oben zurückschwenkt.

## Claims

1. A motor vehicle having an interior in which devices (1a) for holding drink containers and for storing articles are provided on or in fitting components, wherein the respective device (1a) has a storage compartment (4) which can be closed by at least one outer, upper cover (8a), wherein provided above a storage compartment (4) of the device (1a) is a functional cover (16a) which has at least one passage opening (17, 18), wherein the functional cover (16a) can be moved out of a use position (25a) in which the functional cover (16a) is used to hold a container (53), into a non-use position (26a) in which the storage compartment (4) is freely accessible, and wherein provided above the functional cover (16a) is the outer, upper cover (8a) which can be moved out of a closed position (11a) into an open position (12a) and back again,
**characterised in that** the outer, upper cover (8a) and the functional cover (16a) located thereunder are arranged on a housing (2) of the device (1 a) by means of swivel elements (7, 15), and **in that** formed on opposite side walls (5, 6) of the housing (2) is a rotational or swivel axis (13) which extends in the transverse direction y of the storage compartment (4) and on which swivel arms (7) of the outer, cover (8a) and swivel arms (15) of the functional cover (16a) are rotatably arranged.

2. A motor vehicle according to claim 1,
**characterised in that** the housing (2) of the storage compartment (4) is arranged on a frame (20) which is fastened to a component (29, Fig. 3) of the vehicle, and **in that** formed between a wall (23) of the housing, (2) and the frame (20) is a gap (24, Fig. 1, 2) which leads into a cavity (27) outside the housing (2), and **in that** the outer cover (8a) in the open position (12a) and the functional cover (16a) in the non-use position (26a) can be stowed in the cavity (27).

3. A motor vehicle according to claim 1 or claim 2,
**characterised in that** the functional cover (16a) has at least one passage opening (17, 18) and **in that** at least one holding element (41, 42, Fig. 4, 5) is provided in the respective passage opening (17, 18).

4. A motor vehicle according to claim 3,
**characterised in that** two holding elements (41, 42) or three holding elements (41, 42) or four holding elements (41, 42, Fig. 4) are provided in the respective passage opening (17, 18).

5. A motor vehicle according to claim 4,
**characterised in that** the respective holding element (41,42) is pretensioned by at least one spring element (46, Fig. 6) so that after the holding element (41, 42) has been swivelled downwards in the direction of a base (28) of the storage compartment (4), a pretensioning force, generated by the respective spring element (46), swivels the holding element (41, 42) back up again.

## Revendications

1. Véhicule automobile comprenant un habitacle dans lequel, sur ou dans des éléments d'équipement sont montés des dispositifs (1a) de support de récipients pour boissons et de dépôt d'objets, chacun des dispositifs (1a) comprenant un espace de stockage (4) pouvant être fermé par au moins un couvercle supérieur externe (8a), véhicule automobile dans lequel au-dessus d'un compartiment de stockage (4) du dispositif (1a) il est prévu un couvercle fonctionnel (16a) qui comporte au moins une ouverture de passage (17, 18), le couvercle fonctionnel (16a) étant mobile d'une position d'utilisation (25a) dans laquelle il sert à maintenir un récipient (53), à une position de non utilisation (26a) dans laquelle le compartiment de stockage (4) est librement accessible, et, au-dessus du couvercle fonctionnel (16a) étant monté le couvercle supérieur externe (8a) qui est mobile d'une position fermée (11a) à une position ouverte (12a) et inversement,
**caractérisé en ce que**
le couvercle supérieur externe (8a) et le couvercle fonctionnel (16a) situé au-dessous de celui-ci sont montés par l'intermédiaire d'éléments pivotants (7, 15) sur le boîtier (2) du dispositif (1a), et, sur des parois latérales opposées (5, 6) du boîtier (2) est formé un axe de rotation ou de pivotement (13) s'étendant dans la direction transversale y du compartiment de stockage (4), sur lequel sont montés mobiles en rotation des bras pivotants (7) du couvercle extérieur (8a) et des bras pivotants (15) du couvercle fonctionnel (16a).

2. Véhicule conforme à la revendication 1,
**caractérisé en ce que**
le boîtier (2) du compartiment de stockage (4) est monté sur un châssis (20) qui est fixé à un composant du véhicule (29, figure 3), entre une paroi (23) du boîtier (2) et le châssis (20) est formée une fente (24, figures 1, 2) qui conduit dans un espace creux (27) situé à l'extérieur du boîtier (2), et, dans lequel peuvent être logés le couvercle externe (8a) dans sa position ouverte (12a) et le couvercle fonctionnel (16a) dans sa position de non utilisation (26a).

3. Véhicule conforme à la revendication 1 ou 2,
**caractérisé en ce que**
le couvercle fonctionnel (16a) comprend au moins une ouverture de passage (17, 18), et, dans chaque ouverture de passage (17, 18) est prévu au moins un élément support (41, 42, figures 4, 5).

4. Véhicule conforme à la revendication 3,
**caractérisé en ce qu'**
il est prévu deux éléments support (41, 42), ou trois éléments support (41, 42) ou quatre éléments support (41, 42, figure 4) dans chacune des ouvertures de passage (17, 18).

5. Véhicule conforme à la revendication 4,
**caractérisé en ce que**
chacun des éléments support (41, 42) est précontraint par au moins un élément élastique (46, figure 6) de sorte qu'après un pivotement de l'élément support (41, 42) vers le bas en direction du fond (28) du compartiment d'accumulation (4), une force de précontrainte exercée par chacun des éléments élastiques (46) permette de rappeler par pivotement l'élément support (41, 42) vers le haut.
